# EUROPÄISCHE PATENTANMELDUNG

(11) **EP 1 491 563 A2**
(43) Veröffentlichungstag der Anmeldung: **29.12.2004**
(21) Anmeldenummer: 04013869.5
(22) Anmeldetag: 14.06.2004
(51) Int. Cl.: C08G 18/28, C08G 18/38, C08G 18/08, C09D 175/04

(54) **Wässrige Zubereitungen hydrophiler Polyurethanharze**

(30) Priorität: 23.06.2003 DE 10328063
(71) Anmelder: Bayer MaterialScience AG, 51368 Leverkusen (DE)
(72) Erfinder: Münzmay, Thomas Dr., 41539 Dormagen (DE); Schütze, Detlef-Ingo Dr., 51519 Odenthal (DE); Meixner, Jürgen Dr., 47083 Krefeld (DE); Heckes, Michael, 47800 Krefeld (DE)

(57) **Zusammenfassung**

Die vorliegende Erfindung betrifft wässrige Zubereitungen hydrophiler Polyurethane und ihre Verwendung zur Beschichtung von Substraten.

## Beschreibung

Die vorliegende Erfindung betrifft wässrige Zubereitungen hydrophiler Polyurethane und ihre Verwendung zur Beschichtung von Substraten und zur Veredelung flexibler Substrate wie beispielsweise gewebter und nichtgewebter Textilmaterialien, Leder, Papier.

Im Bereich der Textil- und Lederveredelung haben wässrige Zubereitungen von synthetischen Polymeren seit Jahrzehnten eine hervorragende Bedeutung. Aufgrund der Kombination von günstigen Eigenschaften, wie hohe Elastizität, gute Tieftemperatureigenschaften, Chemikalienbeständigkeit und angenehmer Griff, die Polyurethane in sich vereinigen, finden diese besonders in hochwertigen Produkten bevorzugte Anwendung.

Nach ihrer Verarbeitung werden prinzipiell zwei verschieden Systemtypen unterschieden. Dies sind einerseits die sogenannten Einkomponentensysteme (1K-Systeme). Dabei handelt es sich um wässrige Zubereitungen von hochmolekularen Polyurethanen, welche nach dem Applizieren durch einfaches Auftrocknen verfilmen. Ein großer Vorteil dieser Systeme besteht z.B. in der einfachen Handhabung, da weder mehrere Komponenten gemischt werden müssen noch Probleme mit Topfzeiten zu befürchten sind. Nachteile dieser Systeme sind häufig die mangelnde Haftung zum Substrat, da mangels reaktiver Gruppen keine echten chemische Bindungen zum Substrat hergestellt werden können, und ihre geringe Feuchtigkeits- und Lösemittelbeständigkeit. Dem versucht man oft durch den Zusatz reaktiver Komponenten wie z.B. Polyisocyanaten entgegenzuwirken. Abgesehen davon, dass man damit die wichtigsten Vorteile echter 1K-Systeme - einfache Verarbeitung, kein Topfzeitproblem - verliert, verändert man damit in vielen Fällen die Polymereigenschaften, wie Flexibilität, Tieftemperaturelastizität usw. nachteilig.

Demgegenüber stehen die echten Zweikomponentensysteme (2K-Systeme), bestehend aus der wässrigen Zubereitung eines vergleichsweise niedermolekularen, Hydroxylgruppen-haltigen Polyurethan und einem Polyisocyanatvernetzer. 2K-Systeme ergeben Beschichtungen mit hervorragenden Lösemittelbeständigkeiten und Haftungen zu verschiedenen Substraten. Nachteilig an diesen Systemen ist die wesentlich aufwendigere Verarbeitung, die aus dem Dosieren und Mischen mehrerer Komponenten resultiert, und die begrenzte Topfzeit.

Nach der Lehre der DE-A 1 954 8030 erhält man bei Verwendung von wässrigen Zubereitungen von Polyurethanen, welche anteilig sogenannte blockierte Isocyanatgruppen enthalten und Vernetzung selbiger mit Polyaminen, Produkte, die die günstigen Eigenschaften der 2K-Systeme wie Lösemittelbeständigkeit und Haftungen zu verschiedenen Substraten haben, ohne dass das Problem der begrenzten Topfzeit auftritt, da die blockierten Isocyanatgruppen erst bei erhöhter Temperatur deblockieren und dann mit den Polyaminvernetzern abreagieren. Jedoch weisen alle in der benannten Veröffentlichung aufgeführten Blockierungsmittel spezifische Nachteile auf. Einerseits werden Blockierungsmittel beschrieben, die aufgrund ihrer hohen Aktivierungstemperatur nicht in allen Prozessen einsetzbar sind. Andererseits werden Blockierungsmittel mit sehr niedriger Abspalttemperatur benannt, wie z.B. die Malonsäuredialkylester, die aufgrund ihrer hohen Reaktivität nur eine begrenzte Lagerstabilität in Wasser aufweisen. Die bezüglich Lagerstabilität in wässriger Zubereitung und Reaktivität optimalen Blockierungsmittel Butanonoxim und Diisopropylamin erfordern aufgrund ihrer Einstufung als Gefahrstoffe erhöhten Aufwand für die Arbeitshygiene, was zwangsläufig zu erhöhten Kosten für den Endanwender dieser Produkte führt.

Es bestand von daher der dringende Bedarf nach Produkten, welche die oben genannten Nachteile und Probleme bekannter Systeme nicht aufweisen.

Es wurde gefunden, dass wässrige Zubereitungen von Polyurethanen enthaltend 2 bis 20 Gew.-% bezogen auf Festkörper an end- oder seitenständigen Gruppen der Formel (I) 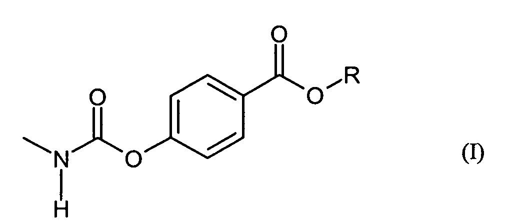 mit R = C₁ bis C₁₈ Alkyl oder cyclo-Alkyl, bevorzugt R = C₂ bis C₈ Alkyl oder cyclo-Alkyl, die oben beschriebenen Nachteile von bisher bekannten derartigen Systemen nicht aufweisen.

Bevorzugt enthalten die erfindungsgemäßen wässrigen Zubereitungen
a) 29,5 bis 60 Gew.-% der vorstehend beschriebenen Polyurethane und
b) 0,5 bis 15 Gew.-% einer Polyaminkomponente zur Vernetzung der nach bestimmungsgemäßer Freisetzung bzw. Abspaltung der Blockierung entstehenden Isocyanatgruppen, sowie
c) 70 bis 25 Gew.-% Wasser.

Die unter I genannten Gruppen sind durch Umsetzung von Isocyanat-funktionellen Produkten mit p-Hydroxybenzoesäureestern zugänglich. D ie V erwendung von p -Hydroxybenzoesäureestem z ur Herstellung von blockierten Isocyanaten ist an sich z. B. aus DE-A 2 514 816 oder US-A 3 313 463 bekannt. Andererseits geben diese Schriften keinen Hinweis darauf, dass p-Hydroxybenzoesäureester zur Herstellung blockierter, lagerstabiler, wässriger Dispersionen geeignet sein könnten, denn wie bereits oben für Malonsäureester ausgeführt, ist die Lagerstabilität der blockierten Isocyanate in Wasser der kritische Punkt für die Verwendbarkeit eines Blockierungsmittels im wässrigen System. Aus der Veröffentlichung von T. Regulski & M. R. Thomas, Org. Coat. Appl. Polym. Sci. Proc. 48 (1983) 1003, geht hervor, dass sich mit p-Hydroxybenzoesäureestern blockierte Isocyanate durch besonders hohe Reaktivität auszeichnen. Daher hätte der Fachmann erwartet, dass wässrige Dispersionen, die p-Hydroxybenzoesäureester-blockierte Isocyanate enthalten, keine ausreichende Lagerstabilität haben. Überraschend wurde aber gefunden, dass wässrige Zubereitungen p-Hydroxybenzoesäureester-blockierter Isocyanate sich nicht nur durch ihre gute Reaktivität gegen aminische Vernetzer auszeichnen, sondern auch eine ausgezeichnete Lagerstabilität selbst bei 50°C haben.

Die Verwendung von mit 4-Hydroxybenzoesäureestern blockiertem Isophorondiisocyanat für Pulverlacke ist in der JP-A 550 03 415 beschrieben, ebenso wie der Einsatz von 4-Hydroxybenzoat (JP-A 04 144 787) als Blockierungsmittel für Polyisocyanate zur Herstellung von wärmeaktivierbaren Aufnahmematerialien. Aber auch diese Schriften legen die Verwendung p-Hydroxybenzoesäureester blockierter Polyisocyanate in wässrigen Systemen nicht nahe.

Im Rahmen der Erfindung umfasst der Begriff "Polyurethan" auch "Polyurethan-Polyharnstoffe", d.h. hochmolekulare Verbindungen, die neben Urethan- auch Harnstoffgruppen enthalten.

Für die erfindungsgemäßen wässrigen Zubereitungen von Polyurethanen geeignete Aufbaukomponenten i) sind organische Verbindungen, die mindestens zwei freie Hydroxylgruppen enthalten, die zur Reaktion mit Isocyanatgruppen befähigt sind. Beispiele für derartige Verbindungen sind höhermolekulare Verbindungen aus den Klassen der Polyester-, Polyesteramid-, Polycarbonat-, Polyacetal- und Polyetherpolyole mit Molekulargewichten von mindestens 300, bevorzugt 500 bis 8000, besonders bevorzugt 800 bis 5000. Bevorzugte Verbindungen sind beispielsweise solche, die mindestens zwei Hydroxylgruppen enthalten, wie Polyetherpolyole, Polyesterpolyole oder Polycarbonatpolyole.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren bzw. ihren Anhydriden, wie z.B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride, wie o-Phthal-, Trimellit- oder Bernsteinsäureanhydrid oder deren Gemisch mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan oder Glycerin, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z. B. die vorstehend als Aufbaukomponenten für Polyesterpolyole genannten niedermolekularen, mehrwertigen Alkohole, erhalten werden.

Auch Hydroxylgruppen aufweisende Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethylcarbonat oder Phosgen hergestellt werden können, bevorzugt mit einem Molekulargewicht von 800 bis 5 000.

Als Polyetherpolyole geeignet sind z.B. die Polyadditionsprodukte der Styroloxide, des Ethylenoxids, Propylenoxids, Tetrahydrofurans, Butylenoxids, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Besonders bevorzugte Aufbaukomponenten sind die Homo-, Misch- und Pfropfpolymerisate des Propylenoxides und des Ethylenoxids, welche durch Anlagerung der genannten Epoxide an niedermolekulare Di- oder Triole, wie sie oben als Aufbaukomponenten für Polyesterpolyole genannte wurden, oder an Wasser zugänglich sind.

Weiter besonders bevorzugte Aufbaukomponenten sind Polyesterdiole auf Basis von Adipinsäure und Glykolen wie 1,4-Butandiol, 1,6-Hexandiol und/oder 2,2-Dimethyl-1,3-propandiol (Neopentylglykol). Ebenfalls besonders bevorzugt sind Mischpolymerisate des 1,6-Hexandiols mit (-Caprolactan und Diphenylcarbonat mit einem Molekulargewicht von 1 000 bis 4 000, sowie 1,6-Hexandiol-polycarbonatdiole mit einem Molekulargewicht von 1 000 bis 3 000.

Gegebenenfalls mitzuverwendende Aufbaukomponenten ii) sind Di- und Polyole des Molekulargewichtsbereichs 62 bis 299. Es kommen als solche beispielsweise die zur Herstellung der Polyesterpolyole genannten mehrwertigen, insbesondere zweiwertigen Alkohole sowie weiterhin niedermolekulare Polyesterdiole, wie z. B. Adipinsäure-bis-(hydroxyethyl)-ester oder kurzkettige auf aromatischen Diolen gestartete Homo- und Mischadditionsprodukte des Ethylenoxid oder des Propylenoxid in Frage. Bevorzugte, gegebenenfalls mitzuverwendende Aufbaukomponenten sind 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Weitere geeignete Aufbaukomponenten ii) sind Triole wie Glyzerin, Trimethlolpropan, Trimetylolethan und/oder deren Alkoxylierungsprodukte.

Die erfindungsgemäßen wässrigen Zubereitungen weisen, bezogen auf Feststoff, einen Gehalt von 0,1 bis 20, bevorzugt von 0,5 bis 12, besonders bevorzugt von 1,8 bis 8 Gew.-% an end- und/oder seitenständig eingebauten Ethylenoxideinheiten als hydrophile, nichtionische Zentren auf, die durch Mitverwendung geeigneter Aufbaukomponenten iii) beim Isocyanatpolyadditionsprozess auf einfache Weise eingebaut werden können.

Hydrophile Aufbaukomponenten iii) zum Einbau endständiger hydrophiler Ethylenoxideinheiten aufweisender Ketten sind Verbindungen der Formel (III),

H-Y'-X-Y-R (III)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Kettengliedern steht, welche zumindest zu 40 %, bevorzugt zumindest zu 65 % aus Ethylenoxid-Einheiten bestehen und die neben Ethylenoxid-Einheiten aus Propoylenoxid-, Butylenoxid- oder Styroloxid-Einheiten bestehen können, wobei unter den letztgenannten Einheiten Propylenoxid-Einheiten bevorzugt sind und
- Y und Y': bevorzugt für Sauerstoff oder auch für -NR'- steht, wobei R' bezüglich seiner Definition R oder Wasserstoff entspricht.

Vorzugsweise werden monofunktionelle Polyether jedoch nur in Molmengen von kleiner 10 mol-%, bezogen auf das verwendete Polyisocyanat, eingesetzt, um den gewünschten hochmolekularen Aufbau der Polyurethan-Elastomeren zu gewährleisten. Bei der Verwendung größerer molarer Mengen an monofunktionellen Alkylenoxidpolyethern ist die Mitverwendung von trifunktionellen, gegenüber Isocyanat reaktive Wasserstoffatome aufweisenden Verbindungen von Vorteil, jedoch mit der Maßgabe, dass das Mittel der Funktionalität der Ausgangsverbindungen nicht größer als 3 ist. Die Herstellung d er m onofunktionellen h ydrophilen Aufbaukomponenten erfolgt in Analogie zu d en g emäß D E-A 2 314 512 oder D E-A 2 314 513 b zw. U S-A 3 905 929 oder US-A 3 920 598 durch Alkoxylierung eines monofunktionellen Starters wie z.B. n-Butanol oder N-Methyl-butylamin unter Verwendung von Ethylenoxid und gegebenenfalls einem weiteren Alkylenoxid wie z.B. Propylenoxid erhältlichen Verbindungen.

Bevorzugt sind die Mischpolymerisate des Ethylenoxids mit Propylenoxid mit einem Ethylenoxidmassenanteil größer 50 mol-%, besonders bevorzugt von 55 bis 89 mol-%.

In einer bevorzugten Ausführungsform werden als hydrophile, nichtionische Aufbaukomponenten Verbindungen mit einem Molekulargewicht von mindestens 400 Dalton, bevorzugt von mindestens 500 Dalton und besonders bevorzugt von 1200 bis 4500 Dalton eingesetzt.

Als Aufbaukomponenten iv) geeignet sind beliebige organische Verbindungen, die mindestens zwei freie Isocyanatgruppen pro Molekül aufweisen, wie z.B. Diisocyanate X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Weitere Beispiele von als Diisocyanatkomponente verwendbaren Verbindungen werden z. B. von W. Siefken in Justus Liebigs Annalen der Chemie, 562, S. 75-136, beschrieben.

Beispiele für bevorzugt einzusetzende Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol und 2,6-Diisocyanatotoluol sowie Gemische der beiden letztgenannten, 4,4'-Diisocyanato-diphenylmethan, 2,2'- und 2,4'-Diisocyanatodiphenylmethan, p-Xylylendiisocyanat, 1,3- und 1,4-Diisocyantomethyl-benzol, sowie aus diesen Verbindungen bestehende Gemische. Besonders bevorzugt sind 1-Isocyanato-3,3,5-trimethyl-5-iso-cyanatomethyl-cyclohexan und 4,4'-Diisocyanato-dicyclohexylmethan.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Die erfindungsgemäßen Polyurethanharz-Dispersionen können, bezogen auf Feststoff, einen Gehalt von 3 bis 30, bevorzugt von 7 bis 17 mmol anionischer Gruppen/100 g Polyurethan-Harz, aufweisen. Der Einbau derartiger ionischer Gruppen gelingt in bekannter Weise durch Mitverwendung von Aufbaukomponenten v), die im Sinne der Isocyanatpolyadditionsreaktion mindestens monofunktionell, bevorzugt difunktionell sind und zusätzlich mindestens eine anionische oder eine potentiell anionische Gruppen enthalten. Beispiele für geeignete Aufbaukomponenten sind
A) Mono- und Dihydroxycarbonsäuren oder deren Salze wie beispielsweise Hydroxypivalinsäure, Hydroxyvaleriansäure, Dimethylolpropionsäure, Dimethylolbuttersäure, Mono- und Dihydroxysulfonsäuren oder deren Salze oder
B) Mono- und Diaminocarbonsäuren und deren Salze wie sie beispielweise einfache natürliche Aminosäuren wie Glycin, Alanin und andere sowie durch Anlagerung von Acrylsäure an primäre, aliphatische Amine wie Ethylendiamin erhältliche Diaminocarbonsäuren oder deren Salze, sowie Mono- und Diaminosulfonsäuren oder deren Salze wie beispielsweise Taurin oder die Alkalisalze der N-(2-Aminoethyl)-2-aminoethansulfonsäure.
   Weitere geeignete anionische Aufbaukomponenten sind
C) Sulfonatgruppen enthaltende aliphatische Diole, z.B. gemäß DE-A 2 446 440.

Sofern die freien Säuren der potentiell anionischen Verbindungen bei Isocyanatpolyadditionsprozess eingesetzt werden, müssen diese zu einem beliebigen Zeitpunkt vor der Überführung der Polyurethane in die wässrige Zubereitung durch Zusatz von Aminen, vorzugsweise tertiären oder ternären Aminen, Metall-, bevorzugt Alkalihydroxiden, Hydrogencarbonaten oder Carbonaten neutralisiert werden. Beispiel für bevorzugte tertiäre Amine sind Triethylamin, Triisopropylamin, Ethyldiisopropylamin, Triethanolamin, Triisopropanolamin, Methyldiethanolamin, Dimethylethanolamin usw.

Als aminische Aufbaukomponenten vi) kommen aliphatische und/oder alicyclische primäre und/oder sekundäre Polyamine in Frage, bevorzugt sind z.B. 1,2-Ethandiamin, 1,6-Hexamethylendiamin, 1-Amino-3,3,5-trimethyl-5-aminomethyl-cyclohexan (Isophorondiamin), Piperazin 1,4-Diaminocyclohexan, Bis-(4-aminocyclohexyl)-methan, Adipinsäuredihydrazid oder Diethylentriamin sowie Hydrazin oder Hydrazinhydrat.

Weitere geeignete Polyamine umfassen Polyetherpolyamine, die formal durch Ersatz der Hydroxylgruppen der oben beschriebenen Polyetherpolyole durch Aminogruppen zustande kommen. Solche Polyetherpolyamine kann man durch Umsetzung der entsprechenden Polyetherpolyole mit Ammoniak und/oder primären Aminen herstellen.

Weitere geeignete aminische Aufbaukomponenten sind solche, die weitere reaktive Gruppen, vorzugsweise alkoholische Hydroxylgruppen tragen, wie beispielsweise Ethanolamin, Diethanolamin, N-Methyl-ethanolamin, 2-Propanolamin usw.

Besonders bevorzugt sind als aminische Aufbaukomponenten 1-Amino-3,3,5-trimethyl-5-aminomethyl-cyclohexan (Isophorondiamin), 1,2-Ethandiamin, Piperazin, Diethylentriamin und Hydrazin.

Der Einbau der erfindungsgemäßen Gruppierungen (I) 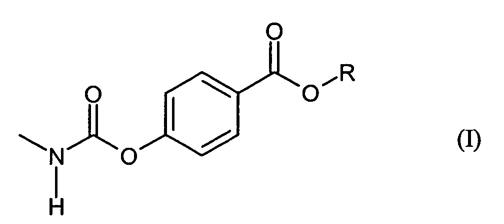 mit R = C₁ bis C₁₈ Alkyl oder cyclo-Alkyl
kann zu beliebigem Zeitpunkt im Zuge des Isocyanatpolyadditionsprozesses durch Reaktion von Isocyanatgruppen mit p-Hydroxybenzoesäureestern der Formel (II) 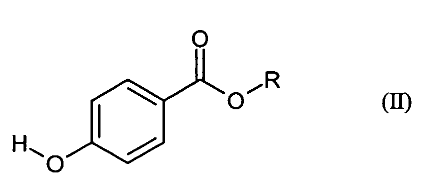 in welcher R = C₁ bis C₁₈-Alkyl oder cyclo-Alkyl, bevorzugt C₂ bis C₈-Alkyl oder cyclo-Alkyl bedeuten erfolgen. Besonders bevorzugt sind die Ethyl-, n-Propyl-, i-Propyl, n-Butyl-, i-Butyl- und t-Butylester der p-Hydroxybenzoesäure.

Die Herstellung der erfindungsgemäßen Polyurethanharz-Dispersionen erfolgt nach bekannten Verfahren des Standes der Technik, wie z.B. von D. Dieterich in Houben-Weyl: Methoden der Organischen Chemie, Band E20, S. 1670 -81 (1987), beschrieben. Bevorzugt werden die erfindungsgemäßen Polyurethan-Dispersionen im sogenannten Aceton-Verfahren hergestellt.

Im Aceton-Verfahren erfolgt der Aufbau der den erfindungsgemäßen Dispersionen zugunde liegenden wässrigen Zubereitungen von Polyurethan-Harzen in einem mehrstufigen Prozess.

Gegenstand der vorliegenden Erfindung ist weiterhin ein Verfahren zur Herstellung der erfindungsgemäßen Polyurethanharz-Dispersionen, dadurch gekennzeichnet, dass
1) in einem ersten Schritt die Komponenten i) bis iv) sowie gegebenenfalls v) A) oder C) und vii) zu einem Prepolymer umgesetzt werden, anschließend
2) in einem zweiten Schritt das Prepolymer in einem organischen Lösemittel gelöst und
3) gegebenenfalls in einem dritten Schritt die isocyanathaltige Prepolymerlösung mit den Komponenten v) B) und vi) umgesetzt wird,
4) in einem nächsten Schritt durch Zugabe von Wasser die Dispersion ausgefällt und
5) in einem abschließenden Schritt das organische Lösemittel entfernt wird.

Gegebenenfalls werden vor oder im Anschluß an Schritt 3) potentiell anionische Komponenten neutralisiert.

In einer ersten Stufe wird aus den Aufbaukomponenten i) bis iv) ein Isocyanatgruppen enthaltendes Prepolymer aufgebaut. Die Einsatzmengen der Einzelkomponenten wird dabei so bemessen, dass eine Isocyanatkennzahl von 1,05 bis 4,5, bevorzugt von 1,2 bis 3 resultiert. Der Isocyanatgehalt der Prepolymere liegt zwischen 0,5 und 9,5 Gew.- %, bevorzugt zwischen 1,25 und 7,5 Gew.-% und besonders bevorzugt zwischen 2,5 und 5,5 Gew.-%.

Sofern anionische oder potenziell anionische Gruppen durch Aufbaukomponenten der unter v), A) und C) beschriebenen Klassen in die erfindungsgemäßen hydrophilen Polyurethanharze eingebaut werden, empfiehlt es sich, diese ebenfalls auf dieser Stufe als Co-Rektanden bei der Prepolymerisierungsreaktion einzubauen.

Der Einbau der erfindungsgemäßen Gruppierungen (I) erfolgt vorteilhafterweise gleichzeitig mit dem Aufbau des Isocyanatprepolymeren durch Co-Reaktion der Aufbaukomponente vii) mit den Aufbaukomponenten i) bis iv) oder im Anschluß an die Prepolymerisierung. In diesem Falle ist bei der Bemessung der Aufbaukomponenten i) bis iv), v) A) oder C) und vii) darauf zu achten, dass die rechnerische, zahlenmittlere Funktionalität zwischen 1,50 und 3,50 bevorzugt zwischen 1,75 und 2,50, besonders bevorzugt zwischen 1,90 und 2,25 liegt. Der Einbau der erfindungsgemäßen Gruppen (I) kann aber auch zu beliebigem anderen Zeitpunkt beim Aufbau der erfindungsgemäßen Polyurethan-Harze erfolgen.

Zur Beschleunigung der Prepolymerisierungsreaktion und zum Einbau der erfindungsgemäßen Gruppierungen (I) können übliche Katalysatoren wie metallorganische Katalysatoren oder aminische Katalysatoren eingesetzt werden. Vorzugsweise finden Diazobicyclooctan (DABCO) vorzugsweise in Mengen von 0,01 bis 2, besonders bevorzugt von 0,1 bis 1 Gew.-% bezogen auf Prepolymer Verwendung.

In einer zweiten Stufe wird das in Stufe 1 hergestellt Prepolymer in einem organischen, zumindest teilweise wassermischbaren Lösemittel, welches keine isocyanatreaktiven Gruppen trägt, gelöst. Bevorzugtes Lösemittel ist Aceton. Es können aber auch andere Lösemittel, wie beispielsweise 2-Butanon, Tetrahydrofuran oder Dioxan oder Gemische dieser Lösemittel verwendet werden. Die Mengen an einzusetzenden Lösemittel sind so zu bemessen, dass ein Feststoffgehalt von 20 bis 80 Gew.-%, bevorzugt von 30 bis 50 Gew.-%, besonders bevorzugt von 35 bis 45 Gew.-% resultiert.

In einer dritten Stufe wird die isocyanathaltige Prepolymerlösung gegebenenfalls mit Mischungen der aminofunktionellen Aufbaukomponenten v) B) und vi) unter Kettenverlängerung zum hochmolekularen Polyurethan-Harz umgesetzt. Die Mengen der Aufbaukomponenten werden so bemessen, dass pro Mol Isocyanatgruppen des gelösten Prepolymern 0,3 bis 0,98 Mol, bevorzugt 0,5 bis 0,85 Mol primäre und/oder sekundäre Aminogruppen der Aufbaukomponenten v) B) und vi) resultieren. Die rechnerische, zahlenmittlere Isocyanatfunktionalität des resultierenden erfindungsgemäßen Polyurethan-Harzes beträgt zwischen 1,55 und 3,10, bevorzugt zwischen 1,90 und 2,35. Das rechnerische, zahlenmittlere Molekulargewicht (Mn) beträgt zwischen 3000 und 250000, bevorzugt zwischen 3500 und 40000 Dalton.

Im erfindungsgemäßen Verfahren werden entweder im ersten Schritt die Komponenten v)A) oder v)C) und/oder es wird im dritten Schritt die Komponente v)B) eingesetzt.

Potentiell anionische Aufbaukomponenten in Form freier Säuregruppen werden vor oder vorzugsweise im Anschluss an die oben beschriebene dritte Stufe durch Zugabe von Neutralisationsmittel in die korrespondierenden Säureanionen überführt.

In einer daran anschließenden Stufe wird das hochmolekulare Polyurethan-Harz durch Zugabe von Wasser in Form einer feinteiligen Dispersion ausgefällt.

In einer abschließenden Stufe wird das organische Lösungsmittel gegebenenfalls unter vermindertem Druck ganz oder teilweise abdestilliert. Die Wassermenge wird bei der vorletzten Stufe so bemessen, dass die erfindungsgemäßen wässrigen Polyurethanharz-Dispersionen einen Feststoff von 30 bis 65, bevorzugt von 35 bis 55 Gew.-% aufweisen.

Die Einsatzmengen der Aufbaukomponente werden so bemessen, dass ein Gehalt an erfindungsgemäßen Gruppen der Formel (I) von 1 bis 35, bevorzugt von 2 bis 20, besonders bevorzugt von 3,5 bis 15 Gew.-% bezogen auf Polyurethan-Harz resultiert.

Gegenstand der vorliegenden Erfindunge ist weiterhin die Vernetzung der wässrigen Zubereitungen der erfindungsgemäßen Polyurethan-Harze mit geeigneten Vernetzern bei erhöhten Temperaturen. Geeignete Vernetzer sind beispielsweise niedermolekulare Di- und Polyole wie unter ii) beschrieben oder Polyamine, vorzugsweise solche wie unter Aufbaukomponenten vi) beschrieben. Die Vernetzung der resultierenden Gemische erfolgt nach Aufbringen der Gemische auf beliebige Substrate nach beliebigen Verfahren wie Rakeln, Streichen, Spritzen, Sprühen, Tauchen etc. bei Temperaturen von 80 bis 200, bevorzugt 100 bis 180 und besonders bevorzugt 130 bis 160°C. Die Mengen der Vernetzerkomponenten werden dabei so bemessen, das ein molares Verhältnis der erfindungsgemäßen Gruppen (I) zu reaktiven Gruppen des jeweiligen Vernetzers von 3 bis 0,5, vorzugsweise 2 bis 0,75 und besonders bevorzugt von 1,5 bis 0,8 resultiert.

Die erfindungsgemäßen wässrigen Zubereitungen können Hilfs- und Zusatzstoffe wie sie beispielsweise in der Leder- und Textilbeschichtungstechnologie üblich sind, wie Pigmente, Verlaufshilfmittel, Stabilisatoren, Verdicker, Füllstoffe etc. enthalten.

Die erfindungsgemäßen wässrigen Zubereitungen sind bei Raumtemperatur praktisch unbegrenzt lagerfähig. Abhängig vom zugesetzten Vemetzer werden Produkte erhalten, welche bei relativ niedrigen Temperaturen von 130 bis 160°C innerhalb von 1,5 bis 3 Minuten zu Beschichtungen mit ausgezeichneten Nass- und Trocken-Haftfestigkeiten zu üblichen Textilien aushärten. Die so erhaltenen Schichten und die mit diesen beschichteten Substrate sind daher ebenfalls Gegenstand der vorliegenden Erfindung. Besonders geeignet sind die erfindungsgemäßen wässrigen Zubereitungen zur Herstellung von Koagulaten, beispielsweise zur Herstellung von K unstlederbasismaterialien durch Koagulation der erfindungsgemäßen wässrigen Zubereitunge in Vliesen, Gewirken und anderen textilen Flächengebilden oder zur Herstellung sogenannter trägerloser Flächengebilde wie beispielsweise Handschuhen oder Kondomen nach dem Koagulationsverfahren.

### Beispiele

- Desmophen® 2020:: Hexandiolpolycarbonatdiol der OH-Z = 56;
Bayer AG, Leverkusen
- Baygal® 70RE30:: Polypropylenoxidtriol der OH-Z = 56;
Bayer AG, Leverkusen
- Desmophen® 550U:: Polypropylenoxidtriol der OH-Z = 385;
Bayer AG, Leverkusen
- Desmodur® I:: 1-Isocyanato-3,3,5-trimethyl-5-isocyanatomethyl-cyclohexan
(Isophorondiisocyanat); Bayer AG, Leverkusen
- Desmodur® 44M:: 4,4'-Methylen-diphenyldiisocyanat; Bayer AG, Leverkusen
- Impranil® ELH:: Lösung eines aliphatischen Polyurethans;
Bayer AG, Leverkusen
- Imprafix® VP LS 2330:: Alkylamin; Bayer AG, Leverkusen
- DABCO:: Diazabicyclooctan; Lieferant Aldrich Chemie, Steinheim
- Walocel® MT 6000PV:: Verdicker auf Cellulosebasis, Lieferant Wolff Cellulosics GmbH & Co. KG; Walsrode

### Beispiel 1

2000 g Desmophen® 2020, 1200 g Baygal® 70RE30 und 300 g eines monofunktionellen, ethylenoxidreichen Polyethers (78 Gew.-% Ethylenoxid) der OH-Zahl 26 werden 1 Stunde bei 120°C und 15 mbar entwässert. Bei 100°C werden zunächst 245 g p-Hydroxybenzoesäuremethylester und 5 g DABCO zugegeben. Sobald die Mischung homogen vermischt ist, werden 744 g Desmodur® I zugegeben. Die Mischung wird bei 90 bis 100°C gerührt bis ein konstanter Isocyanatgehalt von 1,6 bis 1,40 % erreicht ist. Das Reaktionsprodukt wird mit 4000 g Aceton verdünnt und auf 40°C abgekühlt.

Innerhalb von 5 Minuten werden 650 g einer 30%ige Lösung eines Adduktes aus 1 Mol Acrylsäure und 1 mol 1-Amino-3,3,5-trimethyl-5-aminomethyl-cyclohexan (Isophorondiamin) und anschließend 71 g Triethylamin in 400 g Wasser zugegeben. 15 Minuten nach vollständiger Zugabe der Aminlösungen werden unter kräftigem Rühren 3850 g entionisiertes Wasser zugegeben. Unter vermindertem Druck wird das Aceton bei 40 bis 50°C Sumpftemperatur abdestilliert.

Man erhält eine feinteilige Dispersion mit einem Feststoffgehalt von 50,1 Gew.-%, pH = 8,1 und einer Auslaufzeit (gemäß DIN 53 211, 4 mm Düse) von 38 Sekunden.

### Beispiel 2

2000 g Desmophen® 2020, 1200 g Baygal® 70RE30 und 300 g eines monofunktionellen, ethylenoxidreichen Polyethers (78 Gew.-% Ethylenoxid) der OH-Zahl 26 werden 1 Stunde bei 120°C und 15 mbar entwässert. Bei 100°C werden zunächst 265 g p-Hydroxybenzoesäureethylester und 5 g DABCO zugegeben. Sobald die Mischung homogen vermischt ist, werden 744 g Desmodur® I zugegeben. Die Mischung wird bei 90 bis 100°C gerührt, bis ein konstanter Isocyanatgehalt von 1,6 bis 1,40 % erreicht ist. Das Reaktionsprodukt wird mit 4000 g Aceton verdünnt und auf 40°C abgekühlt.

Innerhalb von 5 Minuten werden 650 g einer 30%ige Lösung eines Adduktes aus 1 Mol Acrylsäure und 1 mol 1-Amino-3,3,5-trimethyl-5-aminomethyl-cyclohexan (Isophorondiamin) und anschließend 71 g Triethylamin in 400 g Wasser zugegeben. 15 Minuten nach vollständiger Zugabe der Aminlösungen werden unter kräftigem Rühren 3850 g entionisiertes Wasser zugegeben. Unter vermindertem Druck wird das Aceton bei 40 bis 50°C Sumpftemperatur abdestilliert.

Man erhält eine feinteilige Dispersion mit einem Feststoffgehalt von 50,5 Gew.-%, pH = 7,7 und einer Auslaufzeit (gemäß DIN 53 211, 4 mm Düse) von 85 Sekunden.

### Beispiel 3

2000 g Desmophen® 2020, 1200 g Baygal® 70RE30 und 300 g eines monofunktionellen, ethylenoxidreichen Polyethers (78 Gew.-% Ethylenoxid) der OH-Zahl 26 werden 1 Stunde bei 120°C und 15 mbar entwässert. Bei 100°C werden zunächst 290 g p-Hydroxybenzoesäure-i-propylester und 5 g DABCO zugegeben. Sobald die Mischung homogen vermischt ist, werden 744 g Desmodur® I zugegeben. Die Mischung wird bei 90 bis 100°C gerührt, bis ein konstanter Isocyanatgehalt von 1,6 bis 1,30 % erreicht ist. Das Reaktionsprodukt wird mit 4000 g Aceton verdünnt und auf 40°C abgekühlt.

Innerhalb von 5 Minuten werden 650 g einer 30%ige Lösung eines Adduktes aus 1 Mol Acrylsäure und 1 mol 1-Amino-3,3,5-trimethyl-5-aminomethyl-cyclohexan (Isophorondiamin) und anschließend 71 g Triethylamin in 400 g Wasser zugegeben. 15 Minuten nach vollständiger Zugabe der Aminlösungen werden unter kräftigem Rühren 3900 g entionisiertes Wasser zugegeben. Unter vermindertem Druck wird das Aceton bei 40 bis 50°C Sumpftemperatur abdestilliert.

Man erhält eine feinteilige Dispersion mit einem Feststoffgehalt von 50,2 Gew.-%, pH = 8,0 und einer Auslaufzeit (gemäß DIN 53 211, 4 mm Düse) von 53 Sekunden.

### Beispiel 4

2000 g Desmophen® 2020, 1200 g Baygal® 70RE30 und 300 g eines monofunktionellen, ethylenoxidreichen Polyethers (78 Gew.-% Ethylenoxid) der OH-Zahl 26 werden 1 Stunde bei 120°C und 15 mbar entwässert. Bei 100°C werden zunächst 265 g p-Hydroxybenzoesäureethylester und 5 g DABCO zugegeben. Sobald die Mischung homogen vermischt ist, wird auf 70°C gekühlt und 838 g Desmodur® 44M zugegeben. Die Mischung wird bei 60 bis 70°C gerührt, bis ein konstanter Isocyanatgehalt von 1,5 bis 1,20 Gew.-% erreicht ist. Das Reaktionsprodukt wird mit 4000 g Aceton verdünnt und auf 40°C abgekühlt.

Innerhalb von 5 Minuten werden 600 g einer 30%ige Lösung eines Adduktes aus 1 Mol Acrylsäure und 1 mol 1-Amino-3,3,5-trimethyl-5-aminomethyl-cyclohexan (Isophorondiamin) und anschließend 65 g Triethylamin in 400 g Wasser zugegeben. 15 Minuten nach vollständiger Zugabe der Aminlösungen werden unter kräftigem Rühren 4000 g entionisiertes Wasser zugegeben. Unter vermindertem Druck wird das Aceton bei 40 bis 50°C Sumpftemperatur abdestilliert.

Man erhält eine feinteilige Dispersion mit einem Feststoffgehalt von 49,3 Gew.-%, pH = 7,5 und einer Auslaufzeit (gemäß DIN 53 211, 4 mm Düse) von 33 Sekunden.

### Beispiel 5

Proben der Polyurethan-Harz-Dispersionen gemäß Beispielen 1 bis 4 wurden bei 50°C im Umlufttrockenschrank gelagert und die Stabilität der Dispersion jeweils wöchentlich, visuell beurteilt.

| Lagerstabilität bei 50°C | | | | | | |
|---|---|---|---|---|---|---|
| Beispiel | 1. Woche | 2. Woche | 3. Woche | 4. Woche | 5. Woche | 6. Woche |
| 1 | stabil | stabil | stabil | Sedimentiert | | |
| 2 | stabil | stabil | stabil | stabil | stabil | stabil |
| 3 | stabil | stabil | stabil | stabil | stabil | stabil |
| 4 | stabil | stabil | stabil | stabil | stabil | stabil |

### Beispiel 6: Vliesverfestigung

| Flottenzusammensetzung: | | |
|---|---|---|
| Komponente/Teile | Beispiel 6A | Beispiel 6B |
| Beispiel 1 | 100 | 100 |
| Isophorondiamin | - | 2,5 |
| Wasser | 400 | 400 |

Ein unvorbehandeltes, nicht geschlichtetes Vlies auf Basis Polyamid- und Polyesterfasern wird mit einer Flotte gemäß obiger Tabelle getränkt, foulardiert und in einem 95°C heißen Wasserbad in breitem Zustand behandelt, wobei das Polyurethan-Harz koaguliert. Danach wird das Vlies abgequetscht, bei 120°C getrocknet und bei 150 bis 160°C innerhalb 2 Minuten kondensiert. Das anfängliche Gel verfestigt sich zu einem trockenen, widerstandsfähigen Film.

Durch weitere mechanische Behandlung wie Tumblen, Schleifen, Rauhen oder durch Zusätze wie Ausrüstungsmittel lassen sich eine Vielzahl von Griffvarianten erzielen. Durch Spalten des Vlieses ähnlich der Lederherstellung lässt sich die Dicke des Vlieses einfach regulieren.

### Beispiel 7: Trägerlose Handschuhe

| Komponente/Teile | Beispiel 7A | Beispiel 7B |
|---|---|---|
| Beispiel 2 | 100 | 100 |
| Isophorondiamin | - | 2,0 |
| Wasser | 100 | 100 |

Eine auf 90 bis 120°C erwärmte Keramikform wird zunächst in eine wässrige Flotte enthaltend 6 Gew.-% Ca(NO₃)₂, 3 Gew.-% eines handelsüblichen Emulgators (Emulgator WNS, Bayer AG, Leverkusen) und 10 Gew.-% fein gemahlenes CaCO₃ getaucht. Anschließend wird die Form 2 Minuten bei 90 bis 120°C getrocknet und in eine der Flotten gemäß obiger Tabelle eingetaucht. Je nach gewünschter Filmdicke beträgt die Verweilzeit 5 bis 30 Sekunden. Anschließend wird die beschichtete Form für 30 Sekunden in ein 90°C heißes Wasserbad getaucht und anschließend 3 Minuten bei 160°C kondensiert. Man erhält einen weichen, elastischen, porenfreien, alkoholbeständigen Film.

### Beispiel 8: Haftstrich

100 g einer Dispersion gemäß Beispiel 2 werden mit 2,5 g Imprafix® VP LS 2330 intensiv vermischt. Durch Zugabe von 0,3 g Walocel® MT 6000PV wird die Mischung auf eine streichfähige Viskosität verdickt.

Auf Trennpapier wird zunächst eine lösemittelhaltige Deckstrichpaste (Impranil® ELH) und anschließend obige Haftstrichmischung (Trockenauflage ca. 15 g/m²) aufgerakelt und bei 100°C vorgetrocknet. Anschließend wird das Substrat, ein Polyurethankoagulat-beschichtetes Textil, bei Raumtemperatur aufgelegt und angedrückt. Der gesamte Beschichtungsaufbau wird ohne Druck bei 160°C (Substrattemperatur) in 2 Minuten ausgehärtet. Derartig beschichtete Koagulat-Kunstleder bestehen den Bally-Flexometertest ohne Beschädigung (150.000 Knickungen trocken, 100.000 Knickungen nass) und zeigen exzellente Trocken- und Nasshaftung auf dem Substrat.

## Patentansprüche

1. Wässrige Zubereitungen von Polyurethanen enthaltend 2 bis 20 Gew.-% bezogen auf Festkörper an end- oder seitenständigen Gruppen der Formel (I) 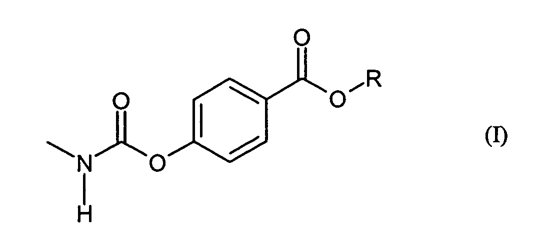 mit R = C₁- bis C₁₈-Alkyl oder Cycloalkyl.

2. Zubereitungen gemäß Anspruch 1, **dadurch gekennzeichnet, dass** R in Formel (I) C₂- bis C₈-Alkyl oder Cycloalkyl bedeutet.

3. Zubereitungen gemäß Ansprüchen 1 und 2, **dadurch gekennzeichnet, dass** die enthaltenen Polyurethane hydrophile, ionische oder ionomere Gruppen enthalten.

4. Zubereitungen gemäß Anspruch 3, **dadurch gekennzeichnet, dass** sie 29,5 bis 60 Gew.-% der Polyurethane, 0,5 bis 15 Gew.-% einer Polyaminkomponente und 70 bis 25 Gew.-% Wasser enthalten.

5. Verfahren zur Herstellung der Zubereitungen gemäß Ansprüchen 1 bis 4, **dadurch gekennzeichnet, dass**
in einer ersten Stufe die Aufbaukomponenten
i) organische Verbindungen, die mindestens zwei freie Hydroxylgruppen enthalten, die zur Reaktion mit Isocyanatgruppen befähigt sind,
ii) Di- und Polyole des Molekulargewichtsbereichs 62 bis 299 und/oder Triole und/oder deren Alkoxylierungsprodukte,
iii) Aufbaukomponenten zum Einbau von end- und/oder seitenständigen Ethylenoxideinheiten,
iv) beliebige o rganische V erbindungen, d ie m indestens z wei freie I socyanatgruppen pro Molekül aufweisen sowie
gegebenenfalls
v) Aufbaukomponenten, die im Sinne der Isocyanatpolyadditionsreaktion mindestens monofunktionell sind und zusätzlich mindestens eine anionische oder eine potentiell anionische Gruppen enthalten ausgewählt aus den Verbindungsgruppen
A) Mono- und Dihydroxycarbonsäuren oder deren Salze oder
C) Sulfonatgruppen enthaltenden aliphatische Diole und
vi) p-Hydroxybenzoesäureester der Formel (II) 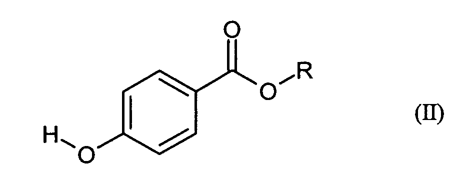 in welcher R = C₁ bis C₁₈-Alkyl oder cyclo-Alkyl, bevorzugt C₂ bis C₈-Alkyl oder cyclo-Alkyl bedeuten
zu einem Prepolymer umgesetzt werden, wobei die Einsatzmengen der einzelnen Aufbaukomponenten so bemessen werden, dass eine Isocyanatkennzahl von 1,05 bis 4,5 resultiert, anschließend
in einer zweiten Stufe das Prepolymer in einem organischen Lösemittel gelöst und
gegebenenfalls in einer dritten Stufe die isocyanathaltige Prepolymerlösung mit den Komponenten v)B) und
vii) aliphatischen und/oder alicyclischen primären und/oder sekundären Polyaminen
umgesetzt wird, wobei vor oder im Anschluß an die dritte Stufe potentiell anionische Komponenten gegebenenfalls neutralisiert werden und entweder in der ersten Stufe die Komponenten v)A) oder v)C) und/oder in der dritten Stufe die Komponente v)B) eingesetzt werden,
in einer vierten Stufe durch Zugabe von Wasser die Dispersion ausgefällt und
in einer abschließenden Stufe das organische Lösemittel entfernt wird.

6. Verwendung von Zubereitungen gemäß Ansprüchen 1 bis 4 zur Beschichtung oder Herstellung von Substraten.

7. Verfahren zur Beschichtung von Substraten mit Zubereitungen gemäß Ansprüchen 1 bis 4, **dadurch gekennzeichnet, dass** das gegebenenfalls zuvor mit einem Koagulationsagens beschichtete und/oder gegebenenfalls erwämte Substrat mit der wässrigen Zubereitung beschichtet oder getränkt wird und anschließend das so behandelte Substrat auf eine Temperatur erwärmt wird, bei der der p-Hydroxybenzoesäureester abgespalten wird und die dadurch freigesetzten Isocyanatgruppen mit dem Vernetzer unter Bildung eines vernetzten Polyurethans abreagieren.

8. Mit aus Zubereitungen gemäß Ansprüchen 1 bis 4 erhaltenen Polymeren beschichtete oder diese enthaltende Substrate.
